# EUROPEAN PATENT SPECIFICATION

(11) **EP 3 985 931 B1**
(45) Date of publication and mention of the grant of the patent: **11.12.2024**
(21) Application number: 20885398.6
(22) Date of filing: 12.10.2020
(51) Int. Cl.: H04L 47/2441, H04L 61/4511, H04L 47/125, H04L 47/24

(54) **SERVICE FLOW DIVISION METHOD, APPARATUS, AND SYSTEM, ELECTRONIC DEVICE, AND STORAGE MEDIUM**
VERFAHREN, VORRICHTUNG UND SYSTEM ZUR DIENSTFLUSSTEILUNG, ELEKTRONISCHE VORRICHTUNG UND SPEICHERMEDIUM
PROCÉDÉ, APPAREIL ET SYSTÈME DE DIVISION DE FLUX DE SERVICE, DISPOSITIF ÉLECTRONIQUE ET SUPPORT DE STOCKAGE

(30) Priority: 08.11.2019 CN 201911089188
(43) Date of publication of application: 20.04.2022
(73) Proprietor: Tencent Technology (Shenzhen) Company Limited, Shenzhen, Guangdong, 518057 (CN)
(72) Inventor: ZHANG, Zhuoyun, Shenzhen, Guangdong 518057 (CN)
(74) Representative: EP&C
(86) International application number: PCT/CN2020/120325
(87) International publication number: WO 2021/088592

(56) References cited:
- WO-A1-2018/145669
- WO-A1-2019/186504
- CN-A- 108 882 305
- CN-A- 109 429 270
- CN-A- 109 889 586
- CN-A- 110 198 363
- CN-A- 110 912 835
- US-A1- 2019 053 117
- US-A1- 2019 158 997
- US-A1- 2021 289 390
- US-A1- 2021 352 042
- ERICSSON: "3GPP TSG-CT WG3 Meeting #105 C3-193085", ADD DN-AAA RE-AUTHENTICATION, 30 August 2019 (2019-08-30), XP051763404
- ANONYMOUS: "3rd Generation Partnership Project; Technical Specification Group Services and System Aspects; 5G enhanced mobile broadband; Media distribution (Release 15)", 3GPP STANDARD; TECHNICAL SPECIFICATION; 3GPP TR 26.891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V1.2.0, 6 July 2018 (2018-07-06), Mobile Competence Centre ; 650, route des Lucioles ; F-06921 Sophia-Antipolis Cedex ; France, pages 1 - 40, XP051475106

## Description

### RELATED APPLICATION

The present disclosure claims priority to Chinese Patent Application No. 201911089188.0, entitled "METHOD, APPARATUS, AND SYSTEM FOR SERVICE OFFLOADING, ELECTRONIC DEVICE, AND STORAGE MEDIUM" filed with the China National Intellectual Property Administration on November 08, 2019.

### FIELD OF THE TECHNOLOGY

The present disclosure relates to the technical field of computer and communication, and in particular, to a method, an apparatus, and a system for service offloading, an electronic device, and a storage medium.

### BACKGROUND OF THE DISCLOSURE

Currently, an offloading solution for a local network is proposed in 5G standards of 3GPP, which aims to route specific service flows to the local network. Both Uplink Classifier (UL-CL) and Internet Protocol Version 6 (IPv6) multi-homing are main offloading solutions.

CN 110 198 363 A describes a method for selecting a mobile edge computing (MEC) node, performed by an edge cloud gateway. The method comprises the steps of receiving a domain name request from a terminal; obtaining a corresponding virtual Internet Protocol address (VIP) from a global server load balance, and determining a corresponding MEC processing server according to a service request received from the terminal and a preset offloading policy.

WO 2018/145669 A1 describes a method and apparatus for implementing traffic splitting. A control plane function provides a packet flow description to a user plane function corresponding to the location information applicable to the packet flow description, so that the user plane function splits traffic data corresponding to the application identifier. A user plane tunnel is established between a base station, an uplink classifier (UL CL), and an anchor User Plane Function UPF, and a package detection rule (PDR) for splitting is activated on the UL CL. The PDR includes the Application Ids of the applications that need to be offloaded. Once service data corresponding to the Application Id is detected by the UL CL according to the PDR, the service data is allocated by the UL CL to a local data network and is not forwarded to the anchor UPF.

US 2019/053117 A1 describes a communication scheme and a system thereof for converging an IoT technology and a 5 communication system for supporting a high data transmission rate beyond that of a 4G system. An uplink classifier (UL CL) solution is described that provides a function of local-offloading some traffic toa place close to the location of a User Equipment (UE) by allocating one IPv4 address to a protocol data unit (PDU) session heading for the same data network name (DNN) in a 5G cellular network. Based on a traffic rule, the UL CL User Plane Function (UPF) may reroute some traffic to the local server to be transparent to the UE.

### SUMMARY

The invention is defined in the appended independent claims. Embodiments representing specific realisations of the invention are defined in the dependent claims.

Other features and advantages of the present disclosure would become obvious through following detailed description, or may be partially learned through practicing embodiments of the present disclosure.

It is appreciated that the foregoing general description and the following detailed description are only exemplary, and construct no limitation to the present disclosure.

### BRIEF DESCRIPTION OF THE DRAWINGS

Drawings herein are incorporated into the specification and constitute a part of the specification. The drawings show embodiments that conform to the present disclosure, and serve to describe a principle of the present disclosure in conjunction with the specification. Apparently, the drawings illustrated hereinafter show merely a part of embodiments of the present disclosure, and those skilled in the art may derive other drawings from these drawings without creative efforts.
Figure 1 is a diagram of system architecture to which a method for service offloading is applied according to an embodiment of the present disclosure.
Figure 2 is a diagram of another system architecture to which a method for service offloading is applied according to an embodiment of the present disclosure.
Figure 3 is a flowchart of a method for service offloading according to an embodiment of the present disclosure.
Figure 4 is a flowchart of another method for service offloading according to an embodiment of the present disclosure.
Figure 5 is a flowchart of another method for service offloading according to an embodiment of the present disclosure.
Figure 6 is a flowchart of another method for service offloading according to an embodiment of the present disclosure.
Figure 7 is a flowchart of another method for service offloading according to an embodiment of the present disclosure.
Figure 8 is a schematic diagram of an interaction process of a system for service offloading according to an embodiment of the present disclosure.
Figure 9 is a block diagram of an apparatus for service offloading according to an embodiment of the present disclosure.
Figure 10 is a schematic structural diagram of a computer system of an electronic device according to an embodiment of the present disclosure.

### DESCRIPTION OF EMBODIMENTS

Hereinafter exemplary embodiments are described more thoroughly with reference to the drawings. The embodiments may be implemented in various forms, and should not be construed as being limited to examples described herein. Rather, the examples are provided to make description of the present disclosure more comprehensive and complete, and convey a concept of the embodiments comprehensively to those skilled in the art. The drawings are merely schematic illustrations of embodiments of the present disclosure, and are not necessarily drawn to scale. Identical reference numbers in the drawings represent same or similar parts, and hence description on these parts would not be repeated.

In addition, the described features, structures, or characteristics may be combined in one or more embodiments in any appropriate manner. Hereinafter many specific details are provided to give a full understanding of the embodiments of the present disclosure. Those skilled in the art can appreciate that a technical solution in the present disclosure may be implemented without one or more of these details, or with another method, another unit, or another step. For the alternative cases, well-known structures, methods, implementations, or operations are not shown or described in detail, to avoid obscuring main concepts in aspects of the present disclosure.

Some blocks shown in the drawings are functional entities, and may not necessarily correspond to physical or logical independent entities. These functional entities may be implemented in software, implemented as one or more hardware modules or integrated circuits, or implemented in different networks, different processing apparatuses, and/or different micro controlling apparatuses.

Currently, offloading solutions for a local network (that is, an edge network) is proposed in 5G standards, which aims to route specific service flows to the local network. Main offloading solutions include an Uplink Classifier (UL-CL) solution and an Internet Protocol Version 6 (IPv6) multi-homing solution. In these two solutions, offloading rules need to be configured on a session management function (SMF) before a service flow is initiated. Such configuration is relatively static and cannot meet a scheduling requirement of specific services.

Implementations of the UL-CL solution are as follows:

In offloading solution based on UL-CLs, a SMF entity may determine to insert an UL-CL on a data path of a packet data unit (PDU) session. The UL-CL is a functionality supported by a user plane function (UPF) entity, and is configured to divert (i.e. offload) a part of data to a local network via a data filter issued by the SMF entity. It is the SMF that determines to insert or delete an UL-CL, and the SMF entity controls the UPF via an N4 interface. The SMF entity may determine to insert an UPF entity supporting the UL-CL on a data path of the PDU session, when establishing a connection for a PDU session, or after establishing the PDU session. After establishing the PDU session, the SMF entity may determine to delete the UPF entity supporting the UL-CL from the data path of the PDU session, or delete the UL-CL functionality from the UPF entity supporting the UL-CL. The SMF entity may incorporate one or more UPF entities into the data path of the PDU session.

User equipment (UE) does not perceive that the data has been offloaded by the UL-CL, or get involved in the process of inserting or deleting the UL-CL. The UL-CL provides uplink data forwarded to the local network or to a core UPF entity, and aggregates data transmitted toward the UE, that is, aggregates data transmitted toward the UE from the local network and the core UPF entity. Such operation is based on data detection, and a data offloading rule is provided by the SMF entity. The UL-CL applies a filtering rule to, for example, detecting an Internet Protocol (IP) address/prefix of an uplink UL-CL data packet transmitted by the UE, and determines how the data packet should be routed.

In the foregoing solution, the SMF entity issues the offloading rule to the UPF entity, or an application function (AF) transmits the offloading rule to the SMF entity and then the SMF issues the offloading rule to the UPF entity, such that the offloading rule is deployed. Generally, such configuration of the offloading rule belongs to a static manner.

In practical application and deployment, requirements on configuring the offloading rules are dynamic and based on specific service scenarios, and the UPF entity is required to detect a service flow to implement the configuration. In such case, static configuration of the offloading rules cannot meet a scheduling requirement of specific service. In view of the above, a method for service offloading is provided according to embodiments of the present disclosure.

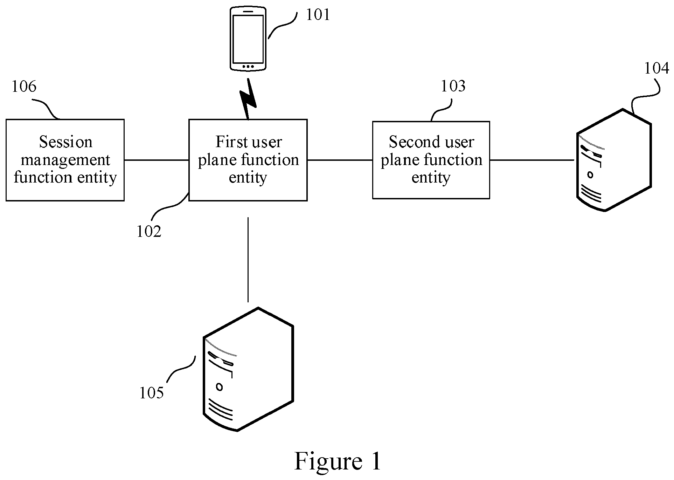

Figure 1 shows a schematic diagram of exemplary system architecture, to which a technical solution according to embodiments of the present disclosure is applicable.

As shown in Figure 1, the system architecture may include a terminal device 101, a first UPF entity 102, a second UPF entity 103, a server 104, an edge network 105, and a SMF entity 106. The terminal device 101 may be a mobile phone as shown in Figure 1, or a device capable of accessing a mobile communication network, such as a tablet computer, a portable computer, a desktop computer, an Internet of Things device, or a smart watch. The first UPF entity 102 is connected to an edge computing device in the edge network 105, and is configured to forward communication data between the terminal device 101 and the edge network 105. The second UPF entity 103 is connected to the server 104, and is configured to forward communication data between the terminal device 101 and the server 104.

Quantities of the terminal devices, the first UPF entities, the second UPF entities, the servers, the edge computing devices, and the SMF entities in Figure 1 are merely exemplary. Quantities of the terminal devices, the first UPF entities, the second UPF entities, the servers, the edge networks, the SMF entities, or the like may be arbitrarily set on requirement for implementation. Those skilled in the art can appreciate that an access device such as a base station is not depicted in Figure 1. Since the solution does not depend on a device for accessing a network, the access device is not mentioned in such solution. Those skilled in the art can further appreciate that that a session connection in such solution includes an access device, such as a base station or a non-3GPP access (for example, Wi-Fi). That is, the terminal device is connected to the access device such as a base station, and connected to the UPF entities via the access device.

In an embodiment, the first UPF entity 102 presets a rule for detecting a service flow. After the terminal device 101 or the server 104 transmits service flow data to the first UPF entity 102, the first UPF entity 102 detects the service flow data according to the preset rule. In a case that a result of the detection meets the preset rule, the first UPF entity 102 extracts a network address in the service flow data, as an offloading address, such that the first UPF entity 102 generates an offloading strategy. The first UPF entity 102 offloads a data packet in an uplink service flow to the edge network 105 according to the offloading strategy. The data packet is transmitted by the terminal device 101, and a destination address of such data packet is the offloading address.

In an embodiment, after generating the offloading strategy, the first UPF entity 102 reports the offloading strategy to the SMF entity 106, and the SMF entity 106 decides whether to permit or reject the offloading strategy. In case of permitting the offloading strategy, the SMF entity 106 returns a response message, which indicates that the offloading strategy is permitted, to the first UPF entity 102, and the first UPF entity 102 determines to deploy the offloading strategy after receiving such response message. In case of rejecting the offloading strategy, the SMF entity 106 returns a response message, which indicates that the offloading strategy is rejected, to the first UPF entity 102, and the first UPF entity 102 determines not to deploy the offloading strategy after receiving such response message.

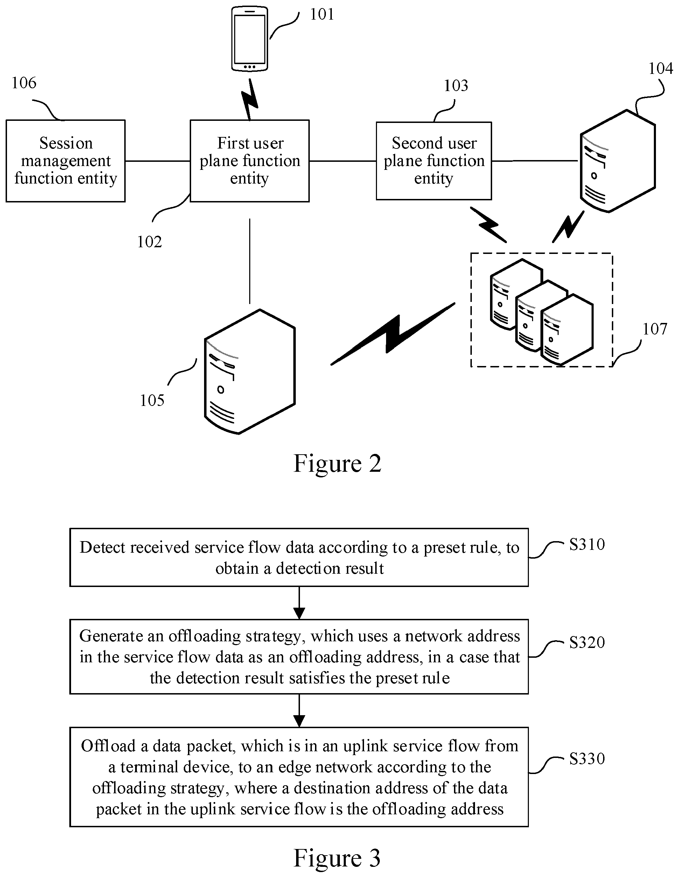

Figure 2 shows a diagram of system architecture to which a method for service offloading is applied according to an embodiment of the present disclosure. The system architecture as shown in Figure 2 differs from that as shown in Figure 1 in that the system architecture is applicable to a scenario in which the service flow data detected by the first UPF entity is a DNS response message. In Figure 2, a service scheduler 107 is added into the system architecture, and the server 104 is a DNS server.

In an embodiment based on the system architecture as shown in Figure 2, the terminal device 101 generates a DNS request, and transmits the DNS request to the first UPF entity 102. The first UPF entity 102 forwards the DNS request to the second UPF entity 103, and then the second UPF entity 103 transmits the DNS request to the DNS server 104. The DNS server 104 generates a DNS response message according to the DNS request, and then transmits the DNS response message to the terminal device 101, via the second UPF entity 103 and the first UPF entity 102. The DNS server may provide a function of global server load balance (GSLB).

In an embodiment, after receiving the DNS response message forwarded by the second UPF entity 103, the first UPF entity 102 detects the DNS response message according to the preset rule. The first UPF entity 102 generates an offloading strategy that uses a network address included in the DNS response message as an offloading address, in a case that a result of the detection satisfies the preset rule. At the same time, the first UPF entity 102 transmits the DNS response message to the terminal device 101.

In an embodiment, after generating the offloading strategy, the first UPF entity 102 offloads a service-flow data packet, which is transmitted by the terminal device 101, to the edge network 105, in a case that a destination address of such data packet matches an offloading address of the offloading strategy. After the edge network 105 receives the service flow data packet, the edge computing device in the edge network 105 may modify a source address of the service-flow data packet to be a network address of the edge computing device, and then transmit the modified service-flow data packet to the service scheduler 107.

In an embodiment, after receiving the modified service-flow data packet, the service scheduler 107 may identify the edge computing device according to the source address (which is now the network address of the edge computing device), and determine whether the edge network 105 having the edge computing device is capable to handle a service access request from the terminal device, according to a condition of service deployment. In case of positive determination, the service scheduler 107 generates a response message carrying a network address of a service server deployed in the edge network 105. In case of negative determination, the service scheduler 107 generates a response message carrying a network address of a service server deployed in a core data center.

In an embodiment, after generating the response message carrying the network address of the service server deployed in the edge network 105, the service scheduler 107 may transmit the response message to the edge computing device in the edge network 105. Then, the edge computing device modifies a destination address of the response message to be a network address of the terminal device, and transmits the modified response message to the first UPF entity 102.

In an embodiment, after receiving the response message transmitted by the first UPF entity, the terminal device 101 may parse the response message to obtain the network address of the service server in the edge network 105. Then, the terminal device 101 may initiate a service access request toward the edge network 105, based on the network address of the service server in the edge network 105.

In embodiments of the present disclosure, the edge network is located in an edge computing center. The edge computing center and the core data center are relative concepts. The core data center is a centralized data center at a back end. A user may access the core data center via a network to obtain required data. A distance between the user and the core data center may be large, and hence a delay of accessing a service may be large. In comparison, the edge computing center is closer to the user, and data in the edge computing center may be updated in real time via a wide area network connecting the edge computing center and the core data center. Hence, the edge computing center can provide a good service to the user directly.

Figure 3 is a flowchart of a method for service offloading according to an embodiment of the present disclosure. The method for service offloading may be performed by a UPF entity, for example, the first UPF entity 102 as shown in Figure 1 or Figure 2. Reference is made to Figure 3, in which the method includes following steps S310 to S330.

In step S310, received service flow data is detected according to a preset rule, to obtain a detection result.

In step S320, an offloading strategy which uses a network address in the service flow data as an offloading address is generated, in a case that the detection result satisfies the preset rule.

In step S330, a data packet, which is in an uplink service flow from a terminal device, is offloaded to an edge network according to the offloading strategy, where a destination address of the data packet in the uplink service flow is the offloading address.

Hereinafter the above steps are described in detail.

In step S310, the received service flow data is detected according to the preset rule, to obtain the detection result. A rule for detecting the service flow data is deployed in the first UPF entity. After receiving the service flow data, the first UPF entity detects the service flow data according to the preset rule, to obtain the detection result.

In step S320, the offloading strategy which uses the network address in the service flow data as the offloading address is generated, in the case that the detection result satisfies the preset rule.

In an embodiment, after the first UPF entity generates the offloading strategy that uses the network address in the service flow data as the offloading address, there are two manners for subsequent processing.

In a first manner, after generating the offloading strategy, the first UPF entity reports the offloading strategy to the SMF entity, and thereby the SMF entity is informed of that the offloading strategy has been deployed on the first UPF entity side.

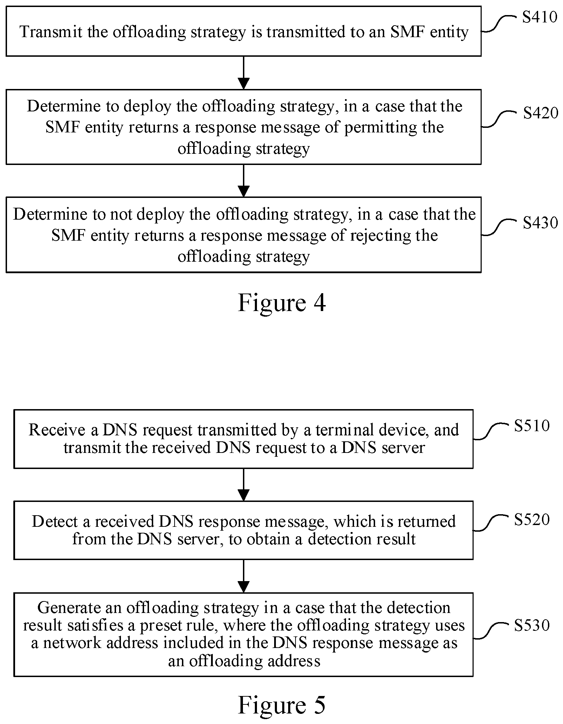

In a second manner, after generating the offloading strategy, the first UPF entity reports the offloading strategy to the SMF entity, and the SMF entity makes a decision on a request concerning the offloading strategy. Reference is made to Figure 4 for an embodiment. After the first UPF entity generates the offloading strategy that uses the network address in the service flow data as the offloading address, the method further includes following steps S410 to S430.

In step S410, the offloading strategy is transmitted to an SMF entity.

In step S420, the offloading strategy is determined to be deployed, in a case that the SMF entity returns a response message of permitting the offloading strategy.

In step S430, the offloading strategy is determined to be not deployed, in a case that the SMF entity returns a response message of rejecting the offloading strategy.

In step S420, after receiving a message reporting the offloading strategy, which is transmitted by the first UPF entity, the SMF entity makes a decision on the offloading strategy according to a strategy set by an operator. In case of permitting the request concerning the offloading strategy from the first UPF entity, the SMF entity transmits the response message, which indicates that the request is permitted, to the first UPF entity. After receiving the response message of permitting the offloading strategy, which is returned by the SMF entity, the first UPF entity determines to deploy the offloading strategy.

In step S430, in case of rejecting the request concerning the offloading strategy from the first UPF entity, the SMF entity transmits the response message, which indicates that the request is rejected, to the first UPF entity. After receiving the response message of rejecting the offloading strategy, which is returned by the SMF entity, the first UPF entity determines not to deploy the offloading strategy.

Reference is further made to Figure 3. In step S330, the data packet in the uplink service flow from the terminal device is offloaded to the edge network according to the offloading strategy. The destination address of the data packet in the uplink service flow is the offloading address.

Data in the uplink service flow includes a service access request transmitted by the terminal device. Because the offloading strategy has been configured at the first UPF entity, the first UPF entity offloads the data packet in the uplink service flow to the edge network according to the offloading strategy, in a case that the destination address of such data packet is consistent with the offloading address in the offloading strategy.

In embodiments of the present disclosure, the UPF entity detects the service flow to generate the offloading strategy in real time, so that the offloading strategy is flexibly configured in real time. Thereby, a specific requirement on scheduling a service deployed in the edge network is satisfied.

Reference is made to Figure 5 for an embodiment. In a case that the service flow data detected by the first UPF entity is a DNS response message, the step S320 may include following steps S510 to S530.

In step S510, a DNS request transmitted by a terminal device is received, and the received DNS request is transmitted to a DNS server.

In step S520, a received DNS response message, which is returned from the DNS server, is detected to obtain a detection result.

In step S530, an offloading strategy is generated in a case that the detection result satisfies a preset rule, where the offloading strategy uses a network address included in the DNS response message as an offloading address.

In step S510, the DNS request transmitted by the terminal device is received, and then the received DNS request is transmitted to the DNS server.

After generating the DNS request, the terminal device transmits the DNS request to a UPF entity. Then, the UPF entity transmits the DNS request to the DNS server, and the DNS server generates the DNS response message in response to the DNS request. After generating the DNS response message, the DNS server transmits the DNS response message to the UPF entity. After receiving the DNS response message, the UPF entity transmits the DNS response message to the terminal device.

In an embodiment, the DNS request transmitted by the terminal device may be transmitted to the first UPF entity via a base station device. After receiving the DNS request, the first UPF entity forwards the DNS request to the DNS server via the second UPF entity. In this embodiment, the first UPF entity may be an I-UPF, and the second UPF entity may be a PSA-UPF.

Reference is further made to Figure 5. In step S520, the received DNS response message returned by the DNS server is detected to obtain the detection result.

After receiving the DNS response message, the first UPF entity detects the DNS response message according to the preset rule, to obtain the detection result.

In an embodiment, port information is encapsulated in the DNS response message, for example, information on port 53 (which is opened by the DNS server and is mainly for domain name resolution) is encapsulated. Therefore, the first UPF entity may determine whether the DNS response message is received, according to the port information encapsulated in a received data packet.

In step S530, the offloading strategy, which uses the network address included in the DNS response message as the offloading address, is generated when the detection result satisfies the preset rule.

In an embodiment of the present disclosure, generating the offloading strategy based on the network address included in the DNS response message refers to generating the offloading strategy that uses the network address included in the DNS response message as the offloading address. Thereby, the first UPF entity can offload a service-flow data packet, of which a destination address is the offloading address, to the edge network.

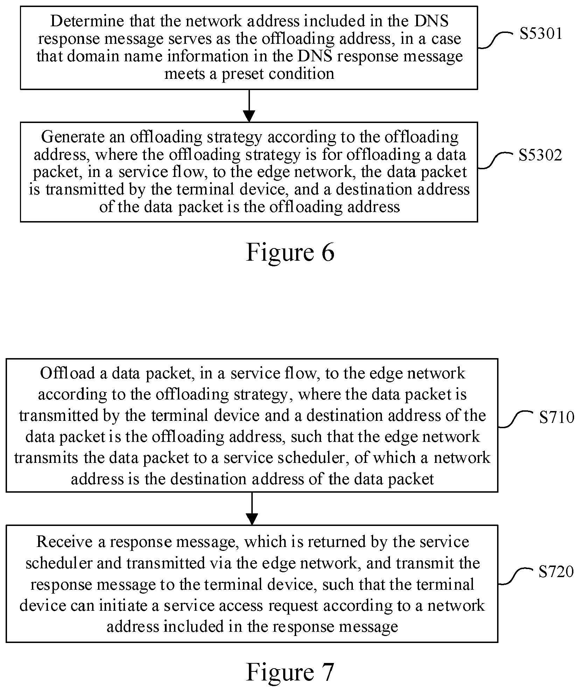

In an embodiment, the corresponding offloading strategy may be generated by the first UPF entity, such that the first UPF entity can offload the service-flow data packet, of which the destination address is the offloading address, to the edge network. Reference is made to Figure 6. In an embodiment, the step S530 includes step S5301 and S5302, which are described in detail as follows.

In step S5301, the network address included in the DNS response message is determined to serve as the offloading address, in a case that domain name information in the DNS response message meets a preset condition.

In an embodiment, the domain name information in the DNS response message meeting a preset condition may refer to the domain name information matching a target domain name. The target domain name may be pre-configured and pre-stored in the first UPF entity by an operator, according to a request of a service party. It is determined whether the domain name information in the DNS response message matches the target domain name, and accordingly it is determined whether to use the network address carried in the DNS response message as the offloading address. In a case that the domain name information in the DNS response message matches the pre-stored target domain name, the network address in the DNS response message is extracted to serve as the offloading address. In a case that the domain name information in the DNS response message does not match the pre-stored target domain name, the network address in the DNS response message is not extracted as the offloading address.

Reference is further made to Figure 6. In step S5302, the offloading strategy is generated according to the offloading address. The offloading strategy is for offloading a data packet, which is in a service flow, to the edge network. The data packet is transmitted by the terminal device, and a destination address of the data packet is the offloading address.

In an embodiment, after the first UPF entity generates the offloading strategy according to the network address included in the DNS response message. Subsequent processing may have two following manners.

In a first manner, after generating the offloading strategy, the first UPF entity reports the offloading strategy to the SMF entity, such that the SMF entity is informed of that the offloading strategy has been configured on the first UPF entity side. At the same time, the first UPF entity transmits the DNS response message to the terminal device, such that the terminal device can transmit subsequent service-flow data packets according to the DNS response message.

In a second manner, after generating the offloading strategy, the first UPF entity reports the offloading strategy to the SMF entity, and the SMF entity makes a decision on a request concerning the offloading strategy. After receiving a response from the SMF entity on the offloading strategy, the first UPF entity transmits the DNS response message to the terminal device. In this manner, the method further includes following steps after the first UPF entity generates the offloading strategy.

The offloading strategy is transmitted to a SMF entity.

In a case that a response message of permitting the offloading strategy is received from the SMF entity, the offloading strategy is determined to be deployed, and the DNS response message is transmitted to the terminal device. Thereby, the terminal device can transmit subsequent service-flow data packets according to the DNS response message.

In this embodiment, after receiving the offloading strategy report message transmitted by the first UPF entity, the SMF entity makes a decision on the offloading strategy according to a strategy set by an operator. In case of permitting the request concerning the offloading strategy from the first UPF entity, the SMF entity transmits a response message, which indicates that the request is permitted, to the first UPF entity. After receiving the response message of permitting the offloading strategy, which is returned by the SMF entity, the first UPF entity deploys the offloading strategy, and transmits the DNS response message to the terminal device. Thereby, the terminal device can transmit the service-flow data packet according to the DNS response message. For example, the terminal device transmits the service-flow data packet to the network address which is included in the DNS response message (where the network address is of a service scheduler, and the service scheduler is assigned to the terminal device by the DNS server).

In case of rejecting the request concerning the offloading strategy from the first UPF entity, the SMF entity transmits a response message, which indicates that the request is rejected, to the first UPF entity. After receiving the response message of rejecting the offloading strategy, which is returned by the SMF entity, the first UPF entity still transmits the DNS response message to the terminal device, such that the terminal device can transmit the service-flow data packet according to the DNS response message. A difference from the forgoing case, in which the SMF entity permits the request concerning the offloading strategy from the first UPF entity, lies in that the first UPF entity does not deploy the offloading strategy when that the SMF entity rejects such offloading strategy. In such case, since no offloading strategy is configured for the network address of subsequent service-flow data packets, the first UPF entity does not offload the service-flow data packet, which is transmitted by the terminal device, to the edge network after receiving such data packet. In comparison, the first UPF entity deploys the offloading strategy in a case that the SMF entity permits the offloading strategy. In such case, since the offloading strategy is configured for the network address of subsequent service-flow data packets, the first UPF entity offloads the service-flow data packet, which is transmitted by the terminal device, to the edge network according to the offloading strategy, after receiving such data packet. Then, the edge computing device transmits the data packet to the service scheduler. In such process, the edge computing device can modify a source address of the service-flow data packet. The modification ensures the service scheduler to identify that the service-flow data packet may be served by a service server in the edge network, and thereby allocate a network address of the service server in a response message that is returned.

In an embodiment, after the first UPF entity generate the offloading strategy that uses the network address included in the DNS response message as the offloading address, the method further includes following steps S710 and S720, as shown in Figure 7.

In step S710, a data packet in a service flow is offloaded to the edge network according to the offloading strategy, where the data packet is transmitted by the terminal device and a destination address of the data packet is the offloading address. Thereby, the edge network transmits such service-flow data packet to a service scheduler, of which a network address is the destination address of such service-flow data packet.

In step S720, a response message, which is returned by the service scheduler and transmitted via the edge network, is received. The response message is then transmitted to the terminal device, such that the terminal device can initiate a service access request according to a network address included in the response message.

In step S710, the service-flow data packet transmitted by the terminal device carries the destination address of the service-flow data packet, that is, carries the network address of the service scheduler. After receiving the service-flow data packet transmitted by the terminal device, the first UPF entity determines whether the destination address of the service-flow data packet is the offloading address in the offloading strategy, according to the offloading strategy that has been deployed. In a case that the destination address of the service-flow data packet is not the offloading address in the offloading strategy, the service-flow data packet is not offloaded to the edge network. The service-flow data packet is directly transmitted to the second UPF entity, and then transmitted by the second UPF entity to the service scheduler. When not identifying any edge network, the service scheduler indicates a network address, of a service server located in a core data center, to the terminal device, such that the terminal device can initiate a service access request toward the service server in the core data center. In a case that that the destination address of the service-flow data packet is the offloading address in the offloading strategy, the service-flow data packet is offloaded to the edge network, such that the edge network can modify a source address of the service-flow data packet, to ensure that the service scheduler can identify the edge network capable of handling the service access request from the terminal device.

In an embodiment, after the first UPF entity offloads the service-flow data packet to the edge network, an edge computing device in the edge network may modify the source address of the service-flow data packet to be a network address of the edge computing device, and transmit the modified service-flow data packet to the service scheduler. After receiving the modified service-flow data packet, the service scheduler may identify the source address (which is now the network address of the edge computing device) and determine, according to a condition of service deployment, whether the edge network, in which the edge computing device is located, can handle the service access request from the terminal device. In a case that the service scheduler determines that the edge network in which the edge computing device is located can handle the service access request from the terminal device, a response message carrying a network address of a service server deployed in the edge network is generated. In a case that the service scheduler determines that the edge network in which the edge computing device is located cannot handle the service access request from the terminal device, a response message carrying a network address of a service server deployed in the core data center is generated.

Reference is further made to Figure 7. In step S720, in case of determining that the service server in the edge network can handle the service access request from the terminal device, the service scheduler generates the response message including the network address of the service server in the edge network. After generating such response message, the service scheduler may transmit the response message to the edge computing device in the edge network. The edge computing device modifies a destination address of the response message to be a network address of the terminal device, and transmits the response message to the first UPF entity.

In an embodiment, in case of identifying that the edge network cannot handle the service access request from the terminal device, the service scheduler generates the response message including the network address of the service server in the core data center. After generating such response message, the service scheduler may transmit the response message to the edge computing device in the edge network. The edge computing device modifies a destination address of the response message with a network address of the terminal device, and transmits the response message to the first UPF entity. Afterwards, the first UPF entity transmits the response message to the terminal device, such that the terminal device can initiate a service access request to wards the service server in the core data center.

In the foregoing embodiments, an offloading strategy is generated according to the network address, which is of the service scheduler and in the DNS response message returned by the DNS server. In a case that the terminal device transmits a service-flow data packet to the service scheduler, the service-flow data packet may be offloaded to the edge network according to the offloading strategy. Thereby, the service scheduler can determine, according to an edge network in which an edge computing device corresponding to an obtained network address is located, whether the edge network can handle the service access request, and returns a response message toward the terminal device. The terminal device can initiate the service access request according to the network address in the response message.

In embodiments of the present disclosure, the offloading strategy is generated in real time, and thereby a service is delivered to the terminal device via the service server in the edge network, which satisfies a scheduling requirement of a specific service. In addition, delivering the service to the terminal device via the service server in the edge network not only reduces a delay of the terminal device accessing the service, but also reduces bandwidth consumption at the core data center.

In an embodiment, after transmitting the response message to the terminal device, the first UPF entity may further perform following steps.

The data packet, which is in the uplink service flow and transmitted by the terminal device, is received.

The data packet in the uplink service flow is transmitted to the edge network, in a case that a destination address of the data packet is consistent with the offloading address.

When receiving a data packet, which is in a downlink service flow and returned by the edge network toward the terminal device, the data packet is transmitted to the terminal device.

In an embodiment, after the first UPF entity transmits the response message, which is returned by the service scheduler, to the terminal device, the terminal device may initiate a service access request according to the network address included in the response message. The uplink-service-flow data packet, which includes the service access request, is first transmitted to the first UPF entity. In a case that the destination address of the uplink-service-flow data packet is consistent with the offloading address, the first UPF entity offloads the uplink-service-flow data packet to the service server in the edge network.

In an embodiment, after receiving the downlink-service-flow data packet, which is returned by the edge network toward the terminal device, the first UPF entity transmits the downlink-service-flow data packet to the terminal device. After receiving the downlink-service-flow data packet returned via the edge network, an offloading device (that is, the first UPF entity) may return a service response to the terminal device via a base station or a non-3GPP access.

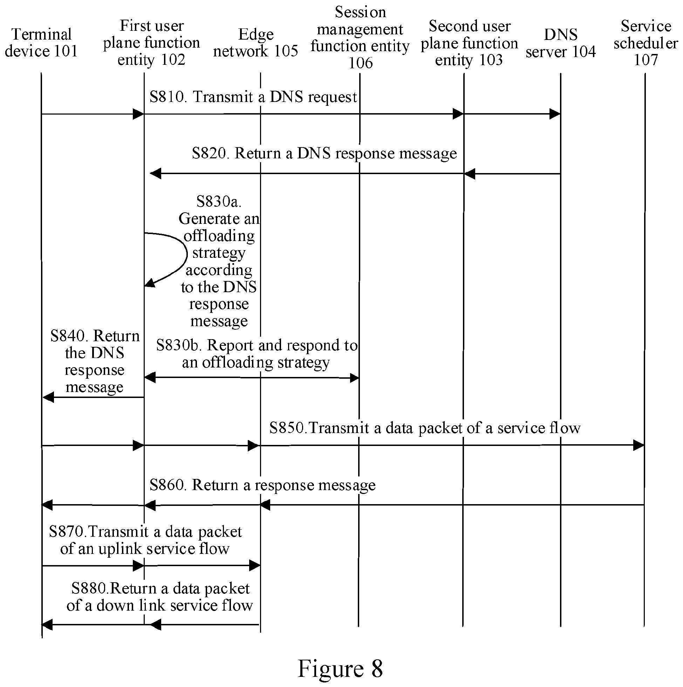

Figure 8 is a schematic diagram of an interaction process of a system for service offloading according to an embodiment of the present disclosure. The interaction process includes following steps S810

In step S810, a terminal device 101 transmits a DNS request to a DNS server 104. The DNS request is configured to request the DNS server 104 to allocate a network address of a service scheduler. The terminal device 101 transmits a DNS request to a first UPF entity 102 via a base station or a non-3GPP access. The first UPF entity 102 forwards the DNS request to a second UPF entity 103. Then, the second UPF entity 103 transmits the DNS request to the DNS server 104.

In step S820, the DNS server 104 selects a corresponding service scheduler 107 according to the DNS request, writes the network address of the service scheduler into a DNS response message, and transmits the DNS response message to the second UPF entity 103 via the Internet. Then, the second UPF entity 103 transmits the DNS response message to the first UPF entity 102.

In step S830a, after receiving the DNS response message, the first UPF entity 102 detects the DNS response message according to a preset rule. In a case that a result of the detection satisfies the preset rule, a domain name included in the DNS response message and a network address corresponding to the domain name are extracted. When information on the domain name information satisfies the preset rule of the first UPF entity 102, the network address in the DNS response message is extracted as an offloading address, to generate an offloading strategy. The offloading strategy is for forwarding a service-flow data packet, of which a destination address matches the offloading address, to an edge network.

In step S830b, after generating the offloading strategy, the first UPF entity 102 reports the generated offloading strategy to a SMF entity 106. In an embodiment, the first UPF entity 102 notifies the SMF entity 106 of that the offloading strategy has been deployed. In another embodiment, the first UPF entity 102 transmits the offloading strategy to the SMF entity 106, and the SMF entity 106 makes a decision on the offloading strategy. In case of permitting a request concerning the offloading strategy, the SMF entity transmits a response message, which indicates that to the request is permitted, to the first UPF entity 102, and the first UPF entity 102 determines to deploy the offloading strategy. In case of rejecting the request concerning the offloading strategy, the SMF entity transmits a response message, which indicates that the request is rejected, to the first UPF entity 102, and the first UPF entity 102determines to not deploy the offloading strategy.

In step S840, the terminal device 101 receives the DNS response message returned by the first UPF entity 102.

In step S850, after receiving the DNS response message, the terminal device 101 transmits a service-flow data packet according to the network address, of the service scheduler 107, included in the DNS response message. The service-flow data packet is first transmitted from the terminal device 101 to the first UPF entity 102. After receiving the service-flow data packet, the first UPF entity 102 forwards the service-flow data packet to the edge network 105, according to the offloading strategy. An edge computing device in the edge network 105 modifies a source address of the service-flow data packet to be a network address of the edge computing device, and transmits the modified service-flow data packet to the service scheduler 107. After receiving the modified service-flow data packet, the service scheduler 107 may determine whether the edge network 105, in which the edge computing device is located, can handle a service access request from the terminal device, according to the source address (which is now the network address of the edge computing device).

In step S860, the service scheduler 107 generates a response message according to the service-flow data packet, and returns the response message to the first UPF entity 102 via the edge network 105. The first UPF entity 102 further returns the response message to the terminal device 101.

In an embodiment, in case of determining that the edge network 105 in which the edge computing device is located can handle the service access request from the terminal device, the service scheduler 107 generates a response message including a network address of a service server in the edge network 105, and transmits the response message to the edge network 105. The edge computing device in the edge network 105 modifies a destination address of the response message to be a network address of the terminal device, and transmits the response message to the first UPF entity 102.

In an embodiment, in a case of determining that the edge network 105 in which the edge computing device is located cannot handle the service access request from the terminal device, the service scheduler 107 generates a response message carrying a network address of a service server deployed in a core data center.

In step S870, after the response message is transmitted to the terminal device 101, the terminal device 101 may initiate a service access request according to the network address, of the service server, included in the response message. An uplink-service-flow data packet including the service access request is first transmitted to the first UPF entity 102. A destination address of the uplink-service-flow data packet is consistent with the offloading address that has been configured. Therefore, the first UPF entity 102 offloads the uplink-service-flow data packet to the edge network 105.

In step S880, The first UPF entity 102 receives a downlink-service-flow data packet, which is returned by the edge network 105 toward the terminal device 101, and transmits the returned downlink-service-flow data packet to the terminal device 101.

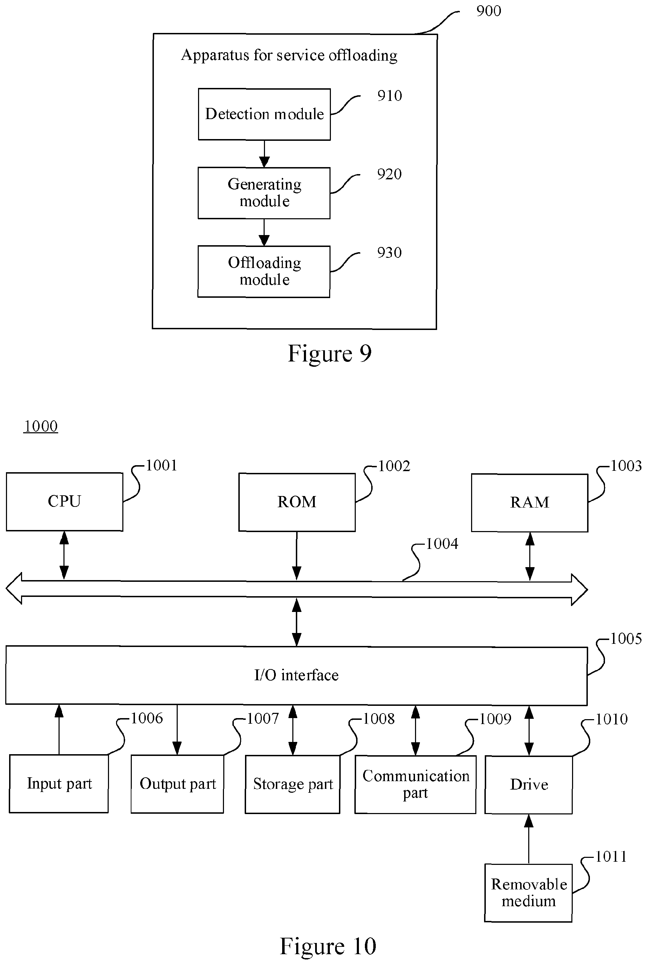

A service offloading apparatus 900 is provided according to an embodiment of the present disclosure, as shown in Figure 9. The apparatus 900 includes a detection module 910, a generating module 920, and an offloading module 930.

The detection module 910 is configured to detect received service flow data according to a preset rule, to obtain a detection result.

The generating module 920 is configured to generate an offloading strategy which uses a network address in the service flow data as an offloading address, in a case that the detection result satisfies the preset rule.

The offloading module 930 is configured to offload a data packet, which is in an uplink service flow from a terminal device, to an edge network according to the offloading strategy, where a destination address of the data packet in the uplink service flow is the offloading address.

In an embodiment, the apparatus further includes a transmission module, a configuration deploying module, and a configuration not-deploying module.

The transmission module is configured to transmit the offloading strategy to a SMF entity.

The configuration deploying module is configured to determine to deploy the offloading strategy, in a case that the SMF entity returns a response message of permitting the offloading strategy.

The configuration not-deploying module is configured to determine to not deploy the offloading strategy, in a case that the SMF entity returns a response message of rejecting the offloading strategy.

In an embodiment, the service flow data is a DNS response message, and the generating module 920 includes a receiving unit, a detection unit, and a generating unit.

The receiving unit is configured to receive a DNS request transmitted by the terminal device, and transmit the received DNS request to a DNS server.

The detection unit is configured to detect a received DNS response message, which is returned from the DNS server, to obtain the detection result.

The generating unit is configured to generate the offloading strategy, in a case that the detection result satisfies the preset rule, where the offloading strategy uses a network address included in the DNS response message as the offloading address.

In an embodiment, the generating unit is further configured to determine that the network address included in the DNS response message serves as the offloading address, in a case that domain name information in the DNS response message meets a preset condition.

The generating unit is further configured to generate an offloading strategy according to the offloading address. The offloading strategy is for offloading a data packet, which is in a service flow, to the edge network. The data packet is transmitted by the terminal device, and a destination address of the data packet is the offloading address.

In an embodiment, after the generating unit generates offloading strategy that uses the network address included in the DNS response message as the offloading address, the apparatus is further configured to perform following operations.

The offloading strategy is transmitted to a SMF entity.

In a case that a response message of permitting the offloading strategy is received from the SMF entity, the offloading strategy is determined to be deployed. The DNS response message is transmitted to the terminal device, to enable the terminal device to transmit a data packet in a service flow according to the DNS response message.

In an embodiment, after the generating unit generates offloading strategy that uses the network address included in the DNS response message as the offloading address, the apparatus is further configured to perform following operations.

A data packet in a service flow is offloaded to the edge network according to the offloading strategy, where the data packet is transmitted by the terminal device and a destination address of the data packet is the offloading address. Thereby, the edge network can transmit such data packet to a service scheduler, of which a network address is the destination address of such data packet.

A response message, which is returned by the service scheduler and transmitted via the edge network, is received. The response message is then transmitted to the terminal device, to enable the terminal device to initiate a service access request according to the network address included in the response message.

In an embodiment of the present disclosure, after the response message is transmitted to the terminal device, the apparatus is further configured to perform following operations.

The data packet, in the uplink service flow, transmitted by the terminal device is received.

The data packet in the uplink service flow is transmitted to the edge network, in a case that a destination address of the data packet in the uplink service flow is consistent with the offloading address.

In a case that a data packet, in a downlink service flow, returned by the edge network toward the terminal device is received, the data packet in the downlink service-flow is transmitted to the terminal device.

Figure 10 is a schematic structural diagram of a computer system of an electronic device adapted to implement any embodiment of the present disclosure.

A computer system 1000 of an electronic device as shown in Figure 10 is merely exemplary, and does not constitute any limitation on functions and application ranges of embodiments of the present disclosure.

As shown in Figure 10, the computer system 1000 includes a processor and a central processing unit (CPU) 1001. The computer system 1000 is capable to perform various appropriate actions and processing, for example, performing the method described in any embodiment of the present disclosure, according to a program stored in a read-only memory (ROM) (also called a storage part) 1008 or a program loaded into a random access memory (RAM) 1003 from the storage part 1008. The RAM 1003 further stores various programs and data required for system operations. The CPU 1001, the ROM 1008, and the RAM 1003 are coupled to each other via a bus 1004. An input/output (I/O) interface 1005 is also coupled to the bus 1004.

Following components are optionally connected to the I/O interface 1005: an input part 1006 including a keyboard, a mouse, or the like; an output part 1007 including a cathode ray tube (CRT), a liquid crystal display (LCD), a speaker, or the like; a storage part 1008 including a hard disk or the like; and a communication part 1009 of a network interface card, including a LAN card, a modem, or the like. The communication part 1009 performs communication via a network such as the Internet. A drive 1010 is coupled to the I/O interface 1005 on requirement. A removable medium 1011, such as a magnetic disk, an optical disc, a magneto-optical disk, or a semiconductor memory, is installed on the drive 1010 as required, so that a computer program read from the removable medium can be installed into the storage part 1008 as required.

Particularly, a process described as follows with reference to the flowcharts may be implemented as computer software programs, according to embodiments of the present disclosure. For example, a computer program product is provided in embodiments of the present disclosure include, and the computer program product includes a computer program carried on a computer-readable medium. The computer program includes program codes for performing the method as shown in the flowcharts. In such embodiment, the computer program may be downloaded and installed from a network via the communication part 1009, and/or installed from the removable medium 1011. When the computer program is executed by a processor or the CPU 1001, various functions defined in the method embodiments and the apparatus embodiments are executed. In some embodiments, the computer system 1000 may further include an artificial intelligence (AI) processor. The AI processor is configured to perform computing operations related to machine learning.

The computer-readable storage medium in embodiments of the present disclosure may be a computer-readable signal medium, a computer-readable storage medium, or any combination thereof. For example, the computer-readable storage medium may be, but is not limited to, a system, an apparatus, or a component, or any combination of the above, which is electric, magnetic, optical, electromagnetic, infrared, or semi-conductor. More specifically, for example, the computer-readable storage medium may include, but is not limited to, an electrical connection having one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any suitable combination of the above. In embodiments of the present disclosure, the computer-readable storage medium may be any tangible medium that contains or stores a program, and the program may be used by or combined with an instruction execution system, apparatus or device. In embodiments of the present disclosure, the computer-readable signal medium may be a data signal included in a baseband, or propagated as a part of a carrier, and a computer-readable program code is carried in the computer-readable signal medium. A data signal propagated in such a way may be in various forms, which include, but are not limited to, an electromagnetic signal, an optical signal, or any appropriate combination thereof. The computer-readable signal medium may further include any computer-readable medium besides a computer-readable storage medium. The computer-readable medium may transmit, carry, or send a program that is used by or used in conjunction with a system, an apparatus, or a device for executing instructions. The program code included in the computer-readable medium may be transmitted via any suitable medium, which includes, but is not limited to, a wireless means, a wire, a cable, radio frequency (RF) signals or the like, or any other suitable combination thereof.

The technical solutions provided in embodiments of the present disclosure may include following beneficial effects. An UPF entity detects received service flow data according to a preset rule, generates an offloading strategy that uses a network address in the service flow data as an offloading address in a case that a result of the detection satisfies the preset rule, and offloads an uplink-service-flow data packet, which is from a terminal device, to an edge network according to the offloading strategy. Thereby, in embodiments of the present disclosure, the UPF entity detects the service flow to generate the offloading strategy in real time, such that the offloading strategy is flexibly configured in real time, and a requirement of specific services is satisfied. For example, technical solutions for service scheduling are provided in the embodiments of the present disclosure, where a DNS response message may be detected by the UPF entity. In a case that the preset rule is satisfied, a corresponding address in the DNS response message may be set as the offloading address. Thereby, data in an uplink service flow can be offloaded to an edge computing device for specific processing, and a requirement on scheduling a specific service deployed in the edge network is met.

Flowcharts and block diagrams in the drawings illustrate architecture, functions, and operations which may be implemented through the system, the method, and the computer program product according to various embodiments of the present disclosure. Accordingly, each box in a flowchart or a block diagram may represent a module, a program segment, or a part of codes. The module, the program segment, or the part of codes includes one or more executable instructions used for implementing designated logic functions. In some alternative embodiments, functions described in boxes may occur in a sequence different from that as shown in the drawings. For example, in practice, content of two succeeding boxes may be performed substantially in parallel, and sometimes event in a reverse sequence, which is determined based on concerned functions. Further, each box in a block diagram and/or a flowchart, and a combination of boxes in the block diagram and/or the flowchart, may be implemented through a dedicated hardware-based system configured to perform functions or operations that are specified, or may be implemented through a combination of dedicated hardware and computer instructions.

The involved units described in embodiments of the present disclosure may be implemented in software or hardware. The described units may be arranged in a processor. A name of a unit does not constitute a limitation on such unit in specific cases.

A computer-readable medium is further provided according to another aspect of embodiments of the present disclosure. The computer-readable medium may be included in the electronic device as described in the foregoing embodiments, or may exist alone and is not disposed in the electronic device. The computer-readable medium carries one or more programs. The one or more programs, when executed by the electronic device, configure the electronic device to implement the method in the forgoing embodiments. For example, the electronic device may implement the operations as shown in Figure 3 to Figure 7.

## Claims

1. A method for service offloading, comprising:
detecting (S310) received service flow data according to a preset rule, to obtain a detection result;
generating (S320) an offloading strategy which uses a network address in the service flow data as an offloading address, in a case that the detection result satisfies the preset rule; and
offloading (S330) a data packet, which is in an uplink service flow from a terminal device, to an edge network according to the offloading strategy, wherein a destination address of the data packet in the uplink service flow is the offloading address;
wherein the service flow data is a DNS response message, and
detecting (S310) the received service flow data according to the preset rule comprises:
receiving (S510) a DNS request transmitted by the terminal device, and transmitting the received DNS request to a DNS server;
detecting (S520) a received DNS response message, which is returned from the DNS server, to obtain the detection result; and
generating (S320) the offloading strategy which uses the network address in the service flow data as the offloading address, in the case that the detection result satisfies the preset rule, comprises:
generating (S530) the offloading strategy, in the case that the detection result satisfies the preset rule, wherein the offloading strategy uses a network address comprised in the DNS response message as the offloading address; and
wherein after generating (S320) the offloading strategy which uses the network address in the service flow data as the offloading address, the method further comprises:
offloading (S710) a data packet, in a service flow, to the edge network according to the offloading strategy, to enable the edge network to transmit the data packet to a service scheduler, of which a network address is a destination address of the data packet, wherein the data packet is transmitted by the terminal device and the destination address of the data packet is the offloading address; and
receiving (S720) a response message, which is returned by the service scheduler and transmitted via the edge network, and transmitting the response message to the terminal device, to enable the terminal device to initiate a service access request according to the network address comprised in the response message.

2. The method according to claim 1, wherein generating (S320) the offloading strategy which uses the network address in the service flow data as the offloading address, the method further comprises:
transmitting (S410) the offloading strategy to a session management function, SMF, entity;
determining (S420) to deploy the offloading strategy, in a case that the SMF entity returns a response message of permitting the offloading strategy; and
determining (S430) to not deploy the offloading strategy, in a case that the SMF entity returns a response message of rejecting the offloading strategy.

3. The method according to claim 1 or 2, wherein generating (S320) the offloading strategy which uses the network address in the service flow data as the offloading address comprises:
determining (S5301) that the network address comprised in the DNS response message serves as the offloading address, in a case that domain name information in the DNS response message meets a preset condition; and
generating (S5302) the offloading strategy according to the offloading address, wherein the offloading strategy is for offloading a data packet, which is in a service flow, to the edge network, the data packet is transmitted by the terminal device, and a destination address of the data packet is the offloading address.

4. The method according to any one of claims 1 to 3, wherein after generating (S320) the offloading strategy which uses the network address in the service flow data as the offloading address, the method further comprises:
transmitting the offloading strategy to a session management function, SMF, entity;
determining to deploy the offloading strategy, in a case that a response message of permitting the offloading strategy is received from the SMF entity; and
transmitting the DNS response message to the terminal device, to enable the terminal device to transmit a data packet in a service flow according to the DNS response message.

5. The method according to any one of claims 1 to 4, wherein after transmitting the response message to the terminal device, the method further comprises:
receiving the data packet, which is in the uplink service flow, transmitted by the terminal device;
transmitting the data packet in the uplink service flow to the edge network, in a case that a destination address of the data packet in the uplink service flow is consistent with the offloading address; and
transmitting a data packet, which is in a downlink service flow and returned by the edge network toward the terminal device, to the terminal device, in a case that the data packet in the downlink service flow is received.

6. A system for service offloading, comprising a terminal device, a user plane function, UPF, entity, a session management function, SMF, entity, and an edge network, wherein:
the terminal device is configured to transmit a data packet of an uplink service flow to the UPF entity, and receive a data packet of a downlink service flow transmitted by the UPF entity;
the UPF entity is configured to:
detect received service flow data according to a preset rule, to obtain a detection result;
generate an offloading strategy which uses a network address in the service flow data as an offloading address, in a case that the detection result satisfies the preset rule; and
offload the data packet, of the uplink service flow from the terminal device, to the edge network according to the offloading strategy, wherein a destination address of the data packet of the uplink service flow is the offloading address;
the SMF entity is configured to receive the offloading strategy transmitted by the UPF entity, and return a response message indicating permitting or rejecting the offloading strategy to the UPF entity; and
the edge network is configured to receive the data packet of the uplink service flow, which is offloaded by the UPF entity, and transmit the data packet of the downlink service flow to the UPF entity;
wherein the service flow data is a DNS response message, and
wherein the detecting of the received service flow data according to the preset rule by the UPF entity comprises:
receiving a DNS request transmitted by the terminal device, and transmitting the received DNS request to a DNS server;
detecting a received DNS response message, which is returned from the DNS server, to obtain the detection result; and
wherein the generating of the offloading strategy which uses the network address in the service flow data as the offloading address, in the case that the detection result satisfies the preset rule, by the UPF entity, comprises:
generating the offloading strategy, in the case that the detection result satisfies the preset rule, wherein the offloading strategy uses a network address comprised in the DNS response message as the offloading address; and
wherein after the generating of the offloading strategy which uses the network address in the service flow data as the offloading address, the UPF entity is further configured to:
offload a data packet, in a service flow, to the edge network according to the offloading strategy, to enable the edge network to transmit the data packet to a service scheduler, of which a network address is a destination address of the data packet, wherein the data packet is transmitted by the terminal device and the destination address of the data packet is the offloading address; and
receive a response message, which is returned by the service scheduler and transmitted via the edge network, and transmitting the response message to the terminal device, to enable the terminal device to initiate a service access request according to the network address comprised in the response message.

7. An electronic device, comprising a memory and a processor, wherein:
the memory stores a computer program; and
the processor is configured to execute the computer program, to configure the electronic device to implement the method according to any one of claims 1 to 5.

8. A computer-readable storage medium, storing a computer program, wherein:
the computer program, when executed by a processor, configures an electronic device comprising the processor to implement the method according to any one of claims 1 to 5.

## Patentansprüche

1. Verfahren für Dienst-Offloading, das Folgendes umfasst:
Erkennen (S310) der empfangenen Dienstflussdaten gemäß einer voreingestellten Regel, um ein Erkennungsergebnis zu erhalten;
Erzeugen (S320) einer Offloading-Strategie, die eine Netzwerkadresse in den Dienstflussdaten als eine Offloading-Adresse verwendet, falls das Erkennungsergebnis die voreingestellte Regel erfüllt; und
Auslagern (S330) eines Datenpakets, das sich in einem Uplink-Dienstfluss von einem Endgerät befindet, zu einem Edge-Netzwerk gemäß der Offloading-Strategie,
wobei eine Zieladresse des Datenpakets im Uplink-Dienstfluss die Offloading-Adresse ist;
wobei die Dienstflussdaten eine DNS-Antwortnachricht sind, und
das Erkennen (S310) der empfangenen Dienstflussdaten gemäß der voreingestellten Regel Folgendes umfasst:
Empfangen (S510) einer von dem Endgerät übertragenen DNS-Anfrage, und Übertragen der empfangenen DNS-Anfrage an einen DNS-Server;
Erkennen (S520) einer empfangenen DNS-Antwortnachricht, die von dem DNS-Server zurückgegeben wird, um das Erkennungsergebnis zu erhalten; und
wobei das Erzeugen (S320) der Offloading-Strategie, die die Netzwerkadresse in den Dienstflussdaten als die Offloading-Adresse verwendet, für den Fall, dass das Erkennungsergebnis die voreingestellte Regel erfüllt, Folgendes umfasst:
Erzeugen (S530) der Offloading-Strategie, falls das Erkennungsergebnis die vorgegebene Regel erfüllt,
wobei die Offloading-Strategie eine in der DNS-Antwortnachricht enthaltene Netzwerkadresse als Offloading-Adresse verwendet; und
wobei das Verfahren nach dem Erzeugen (S320) der Offloading-Strategie, die die Netzwerkadresse in den Dienstflussdaten als die Offloading-Adresse verwendet, ferner Folgendes umfasst:
Auslagern (S710) eines Datenpakets in einem Dienstfluss an das Edge-Netzwerk gemäß der Offloading-Strategie, um das Edge-Netzwerk in die Lage zu versetzen, das Datenpaket an einen Dienstplaner zu übertragen, dessen Netzwerkadresse eine Zieladresse des Datenpakets ist, wobei das Datenpaket von dem Endgerät übertragen wird und die Zieladresse des Datenpakets die Offloading-Adresse ist; und
Empfangen (S720) einer Antwortnachricht, die von dem Dienstplaner zurückgegeben und über das Edge-Netzwerk übertragen wird, und Übertragen der Antwortnachricht an das Endgerät, um dem Endgerät zu ermöglichen, eine Dienstzugriffsanforderung gemäß der in der Antwortnachricht enthaltenen Netzwerkadresse zu initiieren.

2. Verfahren nach Anspruch 1,
wobei das Erzeugen (S320) der Offloading-Strategie, die die Netzwerkadresse in den Dienstflussdaten als die Offloading-Adresse verwendet, das Verfahren ferner Folgendes umfasst:
Übertragen (S410) der Offloading-Strategie an eine Sitzungsmanagementfunktions-(SMF)-Einheit;
Bestimmen (S420), die Offloading-Strategie einzusetzen, wenn die SMF-Einheit eine Antwortnachricht über die Genehmigung der Offloading-Strategie zurückgibt; und
Bestimmen (S430), die Offloading-Strategie nicht einzusetzen, wenn die SMF-Einheit eine Antwortnachricht über die Ablehnung der Offloading-Strategie zurückgibt.

3. Verfahren nach Anspruch 1 oder 2,
wobei das Erzeugen (S320) der Offloading-Strategie, die die Netzwerkadresse in den Dienstflussdaten als Offloading-Adresse verwendet, Folgendes umfasst:
Bestimmen (S5301), dass die in der DNS-Antwortnachricht enthaltene Netzwerkadresse als die Offloading-Adresse dient, falls die Domänennameninformationen in der DNS-Antwortnachricht eine vorgegebene Bedingung erfüllen; und
Erzeugen (S5302) der Offloading-Strategie entsprechend der Offloading-Adresse,
wobei die Offloading-Strategie zum Auslagern eines Datenpakets, das sich in einem Dienstfluss befindet, an das Edge-Netzwerk dient, das Datenpaket durch das Endgerät übertragen wird und eine Zieladresse des Datenpakets die Offloading-Adresse ist.

4. Verfahren nach einem der Ansprüche 1 bis 3,
wobei das Verfahren nach dem Erzeugen (S320) der Offloading-Strategie, die die Netzwerkadresse in den Dienstflussdaten als die Offloading-Adresse verwendet, ferner Folgendes umfasst:
Übertragen der Offloading-Strategie an eine Sitzungsmanagementfunktions-(SMF)-Einheit;
Bestimmen des Einsatzes der Offloading-Strategie in einem Fall, in dem eine Antwortnachricht über die Genehmigung der Offloading-Strategie von der SMF-Einheit empfangen wird; und
Übertragen der DNS-Antwortnachricht an das Endgerät, um das Endgerät in die Lage zu versetzen, ein Datenpaket in einem Dienstfluss gemäß der DNS-Antwortnachricht zu übertragen.

5. Verfahren nach einem der Ansprüche 1 bis 4,
wobei das Verfahren nach dem Übertragen der Antwortnachricht an das Endgerät ferner Folgendes umfasst:
Empfangen des vom Endgerät übertragenen Datenpakets, das sich im Uplink-Dienstfluss befindet;
Übertragen des Datenpakets in dem Uplink-Dienstfluss an das Edge-Netzwerk, falls eine Zieladresse des Datenpakets in dem Uplink-Dienstfluss mit der Offloading-Adresse übereinstimmt; und
Übertragen eines Datenpakets, das sich in einem Downlink-Dienstfluss befindet und vom Edge-Netzwerk in Richtung des Endgeräts zurückgesendet wird, an das Endgerät, falls das Datenpaket im Downlink-Dienstfluss empfangen wird.

6. System für Dienst-Offloading, das ein Endgerät, eine Benutzerebenenfunktions-(UPF)-Einheit, eine Sitzungsmanagementfunktions-(SMF)-Einheit und ein Edge-Netzwerk umfasst, wobei:
das Endgerät so konfiguriert ist, dass es ein Datenpaket eines Uplink-Dienstflusses an die UPF-Einheit sendet und ein Datenpaket eines Downlink-Dienstflusses empfängt, das von der UPF-Einheit gesendet wird;
die UPF-Einheit für Folgendes konfiguriert ist:
Erkennen der empfangenen Dienstflussdaten gemäß einer voreingestellten Regel, um ein Erkennungsergebnis zu erhalten;
Erzeugen einer Offloading-Strategie, die eine Netzwerkadresse in den Dienstflussdaten als eine Offloading-Adresse verwendet, wenn das Erfassungsergebnis die voreingestellte Regel erfüllt; und
Auslagern des Datenpakets des Uplink-Dienstflusses vom Endgerät zum Edge-Netzwerk gemäß der Offloading-Strategie, wobei eine Zieladresse des Datenpakets des Uplink-Dienstflusses die Offloading-Adresse ist;
die SMF-Einheit so konfiguriert ist, dass sie die von der UPF-Einheit übertragene Offloading-Strategie empfängt und eine Antwortnachricht an die UPF-Einheit zurücksendet, die anzeigt, dass die Offloading-Strategie zugelassen oder abgelehnt wurde; und
das Edge-Netzwerk so konfiguriert ist, dass es das Datenpaket des Uplink-Dienstflusses empfängt, das von der UPF-Einheit entladen wird, und das Datenpaket des Downlink-Dienstflusses an die UPF-Einheit sendet;
wobei die Dienstflussdaten eine DNS-Antwortnachricht sind, und
wobei das Erkennen der empfangenen Dienstflussdaten gemäß der voreingestellten Regel durch die UPF-Einheit Folgendes umfasst:
Empfangen einer vom Endgerät übertragenen DNS-Anfrage und Übertragen der empfangenen DNS-Anfrage an einen DNS-Server;
Erkennen einer empfangenen DNS-Antwortnachricht, die von dem DNS-Server zurückgegeben wird, um das Erkennungsergebnis zu erhalten; und
wobei das Erzeugen der Offloading-Strategie, die die Netzwerkadresse in den Dienstflussdaten als die Offloading-Adresse verwendet, in dem Fall, dass das Erkennungsergebnis die voreingestellte Regel erfüllt, durch die UPF-Einheit Folgendes umfasst:
Erzeugen der Offloading-Strategie für den Fall, dass das Erkennungsergebnis die voreingestellte Regel erfüllt, wobei die Offloading-Strategie eine in der DNS-Antwortnachricht enthaltene Netzwerkadresse als Offloading-Adresse verwendet; und
wobei nach dem Erzeugen der Offloading-Strategie, die die Netzwerkadresse in den Dienstflussdaten als die Offloading-Adresse verwendet, die UPF-Einheit ferner für Folgendes konfiguriert ist:
Auslagern eines Datenpakets in einem Dienstfluss an das Edge-Netzwerk gemäß der Offloading-Strategie, um das Edge-Netzwerk in die Lage zu versetzen, das Datenpaket an einen Dienstplaner zu übertragen, dessen Netzwerkadresse eine Zieladresse des Datenpakets ist, wobei das Datenpaket von dem Endgerät übertragen wird und die Zieladresse des Datenpakets die Offloading-Adresse ist; und
Empfangen einer Antwortnachricht, die von dem Dienstplaner zurückgegeben und über das Edge-Netzwerk übertragen wird, und Übertragen der Antwortnachricht an das Endgerät, um dem Endgerät zu ermöglichen, eine Dienstzugriffsanforderung gemäß der in der Antwortnachricht enthaltenen Netzwerkadresse zu initiieren.

7. Elektronische Vorrichtung, die einen Speicher und einen Prozessor umfasst, wobei:
der Speicher ein Computerprogramm speichert; und
der Prozessor so konfiguriert ist, dass er das Computerprogramm ausführt, um die elektronische Vorrichtung so zu konfigurieren, dass sie das Verfahren nach einem der Ansprüche 1 bis 5 ausführt.

8. Computerlesbares Speichermedium, das ein Computerprogramm speichert, wobei:
das Computerprogramm, wenn es von einem Prozessor ausgeführt wird, eine elektronische Vorrichtung mit dem Prozessor konfiguriert, um das Verfahren nach einem der Ansprüche 1 bis 5 durchzuführen.

## Revendications

1. Procédé de délestage de service, comprenant :
la détection (S310) de données de flux de service reçues conformément à une règle prédéfinie, pour obtenir un résultat de détection ;
la génération (S320) d'une stratégie de délestage qui utilise une adresse de réseau dans les données de flux de service en tant qu'adresse de délestage, dans le cas où le résultat de détection satisfait la règle prédéfinie ; et
le délestage (S330) d'un paquet de données, qui est dans un flux de service de liaison montante en provenance d'un dispositif terminal, sur un réseau périphérique conformément à la stratégie de délestage, dans lequel une adresse de destination du paquet de données dans le flux de service de liaison montante est l'adresse de délestage ;
dans lequel les données de flux de service sont un message de réponse DNS, et
la détection (S310) des données de flux de service reçues conformément à la règle prédéfinie comprend :
la réception (S510) d'une requête DNS émise par le dispositif terminal, et l'émission de la requête DNS reçue sur un serveur DNS ;
la détection (S520) d'un message de réponse DNS reçu, qui est retourné depuis le serveur DNS, pour obtenir le résultat de détection ; et
la génération (S320) de la stratégie de délestage qui utilise l'adresse de réseau dans les données de flux de service en tant qu'adresse de délestage, dans le cas où le résultat de détection satisfait la règle prédéfinie, comprend :
la génération (S530) de la stratégie de délestage, dans le cas où le résultat de détection satisfait la règle prédéfinie, dans lequel la stratégie de délestage utilise une adresse de réseau comprise dans le message de réponse DNS en tant qu'adresse de délestage ; et
dans lequel, après la génération (S320) de la stratégie de délestage qui utilise l'adresse de réseau dans les données de flux de service en tant qu'adresse de délestage, le procédé comprend en outre :
le délestage (S710) d'un paquet de données, dans un flux de service, sur le réseau périphérique conformément à la stratégie de délestage, pour permettre au réseau périphérique d'émettre le paquet de données sur un planificateur de service(s), dont une adresse de réseau est une adresse de destination du paquet de données, dans lequel le paquet de données est émis par le dispositif terminal et l'adresse de destination du paquet de données est l'adresse de délestage ; et
la réception (S720) d'un message de réponse, qui est retourné par le planificateur de service(s) et qui est émis via le réseau périphérique, et l'émission du message de réponse sur le dispositif terminal, pour permettre au dispositif terminal d'initier une requête d'accès au service conformément à l'adresse de réseau comprise dans le message de réponse.

2. Procédé selon la revendication I, dans lequel la génération (S320) de la stratégie de délestage qui utilise l'adresse de réseau dans les données de flux de service en tant qu'adresse de délestage comprend en outre :
l'émission (S410) de la stratégie de délestage sur une entité de fonction de gestion de session, SMF ;
la détermination (S420) de déployer la stratégie de délestage, dans le cas où l'entité SMF retourne un message de réponse autorisant la stratégie de délestage ; et
la détermination (S430) de ne pas déployer la stratégie de délestage, dans le cas où l'entité SMF retourne un message de réponse rejetant la stratégie de délestage.

3. Procédé selon la revendication 1 ou 2, dans lequel la génération (S320) de la stratégie de délestage qui utilise l'adresse de réseau dans les données de flux de service en tant qu'adresse de délestage comprend :
la détermination (S5301) du fait que l'adresse de réseau comprise dans le message de réponse DNS joue le rôle d'adresse de délestage, dans le cas où une information de nom de domaine dans le message de réponse DNS satisfait une condition prédéfinie ; et
la génération (S5302) de la stratégie de délestage conformément à l'adresse de délestage, dans lequel la stratégie de délestage a pour objet de délester un paquet de données, qui est dans un flux de service, sur le réseau périphérique, le paquet de données est émis par le dispositif terminal, et une adresse de destination du paquet de données est l'adresse de délestage.

4. Procédé selon l'une quelconque des revendications 1 à 3, dans lequel, après la génération (S320) de la stratégie de délestage qui utilise l'adresse de réseau dans les données de flux de service en tant qu'adresse de délestage, le procédé comprend en outre :
l'émission de la stratégie de délestage sur une entité de fonction de gestion de session, SMF ;
la détermination de déployer la stratégie de délestage, dans le cas où un message de réponse autorisant la stratégie de délestage est reçu depuis l'entité SMF ; et
l'émission du message de réponse DNS sur le dispositif terminal, pour permettre au dispositif terminal d'émettre un paquet de données dans un flux de service conformément au message de réponse DNS.

5. Procédé selon l'une quelconque des revendications 1 à 4, dans lequel, après l'émission du message de réponse sur le dispositif terminal, le procédé comprend en outre :
la réception du paquet de données, qui est dans le flux de service de liaison montante, qui est émis par le dispositif terminal ;
l'émission du paquet de données dans le flux de service de liaison montante sur le réseau périphérique, dans le cas où une adresse de destination du paquet de données dans le flux de service de liaison montante est cohérente avec l'adresse de délestage ; et
l'émission d'un paquet de données, qui est dans un flux de service de liaison descendante et qui est retourné par le réseau périphérique en direction du dispositif terminal, sur le dispositif terminal, dans le cas où le paquet de données dans le flux de service de liaison descendante est reçu.

6. Système de délestage de service, comprenant un dispositif terminal, une entité de fonction de plan utilisateur, UPF, une entité de fonction de gestion de session, SMF, et un réseau périphérique, dans lequel :
le dispositif terminal est configuré pour émettre un paquet de données d'un flux de service de liaison montante sur l'entité UPF, et pour recevoir un paquet de données d'un flux de service de liaison descendante qui est émis par l'entité UPF ;
l'entité UPF est configurée pour :
détecter des données de flux de service reçues conformément à une règle prédéfinie, pour obtenir un résultat de détection ;
générer une stratégie de délestage qui utilise une adresse de réseau dans les données de flux de service en tant qu'adresse de délestage, dans le cas où le résultat de détection satisfait la règle prédéfinie ; et
délester le paquet de données, du flux de service de liaison montante en provenance du dispositif terminal, sur le réseau périphérique conformément à la stratégie de délestage, dans lequel une adresse de destination du paquet de données du flux de service de liaison montante est l'adresse de délestage ;
l'entité SMF est configurée pour recevoir la stratégie de délestage émise par l'entité UPF, et pour retourner un message de réponse indiquant l'autorisation ou le rejet de la stratégie de délestage sur l'entité UPF ; et
le réseau périphérique est configuré pour recevoir le paquet de données du flux de service de liaison montante, qui est délesté par l'entité UPF, et pour émettre le paquet de données du flux de service de liaison descendante sur l'entité UPF ;
dans lequel les données de flux de service sont un message de réponse DNS, et
dans lequel la détection des données de flux de service reçues conformément à la règle prédéfinie par l'entité UPF comprend :
la réception d'une requête DNS émise par le dispositif terminal, et l'émission de la requête DNS reçue sur un serveur DNS ;
la détection d'un message de réponse DNS reçu, qui est retourné depuis le serveur DNS, pour obtenir le résultat de détection ; et
dans lequel la génération de la stratégie de délestage qui utilise l'adresse de réseau dans les données de flux de service en tant qu'adresse de délestage, dans le cas où le résultat de détection satisfait la règle prédéfinie, par l'entité UPF, comprend :
la génération de la stratégie de délestage, dans le cas où le résultat de détection satisfait la règle prédéfinie, dans lequel la stratégie de délestage utilise une adresse de réseau comprise dans le message de réponse DNS en tant qu'adresse de délestage ; et
dans lequel, après la génération de la stratégie de délestage qui utilise l'adresse de réseau dans les données de flux de service en tant qu'adresse de délestage, l'entité UPF est en outre configurée pour :
délester un paquet de données, dans un flux de service, sur le réseau périphérique conformément à la stratégie de délestage, pour permettre au réseau périphérique d'émettre le paquet de données sur un planificateur de service(s), dont une adresse de réseau est une adresse de destination du paquet de données, dans lequel le paquet de données est émis par le dispositif terminal et l'adresse de destination du paquet de données est l'adresse de délestage ; et
recevoir un message de réponse, qui est retourné par le planificateur de service(s) et qui est émis via le réseau périphérique, et émettre le message de réponse sur le dispositif terminal, pour permettre au dispositif terminal d'initier une requête d'accès au service conformément à l'adresse de réseau comprise dans le message de réponse.

7. Dispositif électronique, comprenant une mémoire et un processeur, dans lequel :
la mémoire stocke un programme informatique ; et
le processeur est configuré pour exécuter le programme informatique, pour configurer le dispositif électronique pour mettre en oeuvre le procédé selon l'une quelconque des revendications 1 à 5.

8. Support de stockage lisible par ordinateur, stockant un programme informatique, dans lequel :
le programme informatique, lorsqu'il est exécuté par un processeur, configure un dispositif électronique comprenant le processeur pour mettre en oeuvre le procédé selon l'une quelconque des revendications 1 à 5.
